# EUROPEAN PATENT SPECIFICATION

(11) **EP 0 327 566 B1**
(45) Date of publication and mention of the grant of the patent: **07.04.1993**
(21) Application number: 87907044.9
(22) Date of filing: 21.09.1987
(51) Int. Cl.: G02B 26/02

(54) **OPTICAL SWITCH**
OPTISCHER SCHALTER
COMMUTATEUR OPTIQUE

(30) Priority: 07.10.1986 GB 8624001; 18.08.1987 GB 8719478
(43) Date of publication of application: 16.08.1989
(60) Divisional application: 92202845.1
(73) Proprietor: THE WHITAKER CORPORATION, Wilmington, Delaware 19808 (US)
(72) Inventor: TEN BERGE, Eduardus, Franciscus, Antonius, NL-5151 SL Drunen (NL); VAN ALST, Gerardus, Maria, NL-Oss (NL)
(74) Representative: Warren, Keith Stanley
(86) International application number: US8702381
(87) International publication number: WO8802869

(56) References cited:
- DE-A- 3 012 450
- FR-A- 2 412 084
- GB-A- 2 088 083
- GB-A- 2 107 481
- US-A- 4 152 043
- US-A- 4 189 206
- IBM TECHNICAL DISCLOSURE BULLETIN, vol. 25, no. 8, January 1983, IBM Corporation, New York, US; L. BALLIET et al.: "Fiber-optic switch with magnetic self-alignment", pages 4254-4257
- IBM TECHNICAL DISCLOSURE BULLETIN, vol. 27, no. 1B, June 1984, IBM Corporation, New York, US; L. BALLIET: "Fiber-optic communication loop", pages 543-546
- IBM TECHNICAL DISCLOSURE BULLETIN, vol. 22, no. 7, December 1979, pages 2924-2925
- ELECTRONICS LETTERS, vol. 12, no. 15, 22nd July 1976, page 388

## Description

The subject invention relates to a switch mechanism for aligning alternative optical fibers in optical alignment.

In one type of known electromagnetic optical switch, first and second optical fibers have respective first and second end portions mounted for relative lateral movement to bring optical end faces into and out of optical alignment in different switching positions, which fiber end portions are fixed, for example by adhesive, in grooves provided in respective ferromagnetic metal carrier blocks, the first of which is normally stationary, the second being movable and forming the switch armature.

However, such blocks must be machined and mounted with a high degree of precision to achieve the precise alignment of the optical faces of the end fibers necessary to avoid unacceptable transmission losses. In addition, the blocks are relatively massive and, furthermore, a return spring is normally required to return and retain the armature block in the OFF position of the switch. These factors contribute to the overall complexity, size and manufacturing costs of the switch.

According to one aspect thereof the present invention consists in an optical switch for varying the light path of an optical fiber, which includes a first optical fiber having a secured end and a free end, actuator means for switching the free end of the fiber between first and second positions placing the free end of the first optical fiber into optional abutment with end faces of either a second or a third optical fiber within a switch housing, and alignment means for alternatively optically aligning the first fiber with either the second or the third fiber with the end faces of the fibers in optical abutment, wherein the alignment means includes two V-grooves within the switch housing facing each other with the first optical fiber disposed in the space between the two facing V-grooves, the actuator means being operable to move the first fiber between the two facing V-grooves into optical alignment with either the second or the third fiber; characterized in that each of the optical fibers has an exterior coating of a metallic plated material providing a resilient fiber end portion on each of the fibers, the resilience of the end portions of the second and third fibers spring loading said end portions within, and against the surface of the respective V-groove to provide precise alignment of said abutting fiber ends.

There is disclosed in FR-A-2 412 084 and US-A-4 152 043 an optical switch as recited in the preamble of claim 1. These documents disclose only that the first optical fiber has a metallic coating, the second and third fibers being unmetallized and fixed in the V-grooves by adhesive means.

IBM Technical Disclosure Bulletin, Vol. 25 No. 8, January 1983, pp 4254-4257; and IBM Technical Disclosure Bulletin, Vol. 22, No. 7, December 1979, pp 2924-2925, also disclose optical switches in which the first optical fiber has a metallic coating.

US-A-4 189 206 discloses an optical switch in which a plurality of first fibers are switched between a like plurality of second fibers and a like plurality of third fibers.

Electronics Letters, Vol. 12, No. 15, 22nd July 1976, discloses that in an optical switch a fiber can be moved by magnetic forces if it is provided with a ferromagnetic sleeve.

The alignment means may include means to move the second or third optical fibers along an axial direction out of an abutting relationship with the first optical fiber prior to the transverse movement of the opposed end faces, and the second or third optical fibers into an abutting relationship when respective opposed end faces are aligned. The preferred embodiment for moving the second or third optical fibers in an axial direction includes providing a band portion around an end of the second or third optical fibers and including a recessed portion on a side edge of the switch plate member with the band portions of the second and third optical fibers in a spring loaded condition against the side edge of the switch plate with only one band portion in alignment with the recessed portion at any location of the switching plate. Transverse movement of the switching plate moves the first optical fiber into and out of optical alignment with the second or third optical fiber and the recessed portion cams the second or third optical fiber out of an abutting relationship with the first said fiber. The recessed portion of the switching plate is profiled to move either the second or third optical fiber out of an abutting relation with the first optical fiber prior to the transverse movement of the two opposed end faces of the first and second or the first and third optical fibers.

Electroplating an end of the fiber also allows the fiber to be switched by mechanical or electromagnetic means. If the switch is magnetically switched, there is provided a magnetically operated optical switch in which the armature comprises a ferromagnetic metal coating electroplated on the end portion of the second fibre which is mounted for the switching movement. This avoids a need for a relatively massive ferromagnetic metal block to carry the fibre and, as the coating can be readily deposited to constant thickness on the fibre, ensuring concentricity, the fibre end portion can be more easily mounted for switching movement into and out from optical alignment with the stationary fibre.

In the magnetically actuated version of the invention, the second optical fibre is fixed in a support at a location spaced from the optical face, and the metal coating extends along the length of the fibre between the optical face and the fixed location, the coating being such to impart a degree of resiliency to the fibre so that the length acts as a beam spring and is inherently biased into a first switch position to which it will return without a requirement for an additional return spring. Third and fourth coated end portions are secured to extend side-by-side in the same direction with the first and second fibre end portions, respectively, with their respective optical end faces coplanar so that the second and fourth end portions are movable together by the magnetic field from a position in which the optical faces of only the third and fourth end portions are in optical alignment to a position in which the optical faces of the first and fourth, and second and third end portions, are in optical alignment, respectively.

According to another embodiment thereof the invention consists in an optical switch as defined in claim 8.

Embodiments of the invention will now be described by way of example with reference to the accompanying drawings, in which:
Figure 1 shows an isometric view of the assembled switch.
Figures 2A-2D show schematically the switching arrangements between the optical fibers.
Figure 3 shows an isometric view of the numerous components of the fiber optic switch in an exploded manner to show the detail of the components.
Figure 4 is an enlarged view of one switch end showing the intermediate optical fiber in a lower position.
Figure 5 is a view similar to that of Figure 4 wherein the switch has transferred the intermediate optical fiber to an upper position.
Figure 6 and Figure 7 show the positions of the fiber optic connectors when moved forward and rearward during the switching movement shown in Figures 4 and 5.
Figure 8 shows an alternate embodiment of switch where several optic fibers, in the form of ribbon optic cable, is used as the switching media.
Figure 9 is a schematic plan view of the electromagnetic switch in the OFF position;
Figure 10 is a side elevation of the electromagnetic switch shown in Figure 9;
Figure 11 is a fragmentary perspective view of the electromagnetic switch;
Figure 12 is a fragmentary perspective view of the electromagnetic switch in the ON position;
Figure 13 is a circuit diagram of the electromagnetic switch in the ON position; and,
Figure 14 is a circuit diagram of the electromagnetic switch in the OFF position.

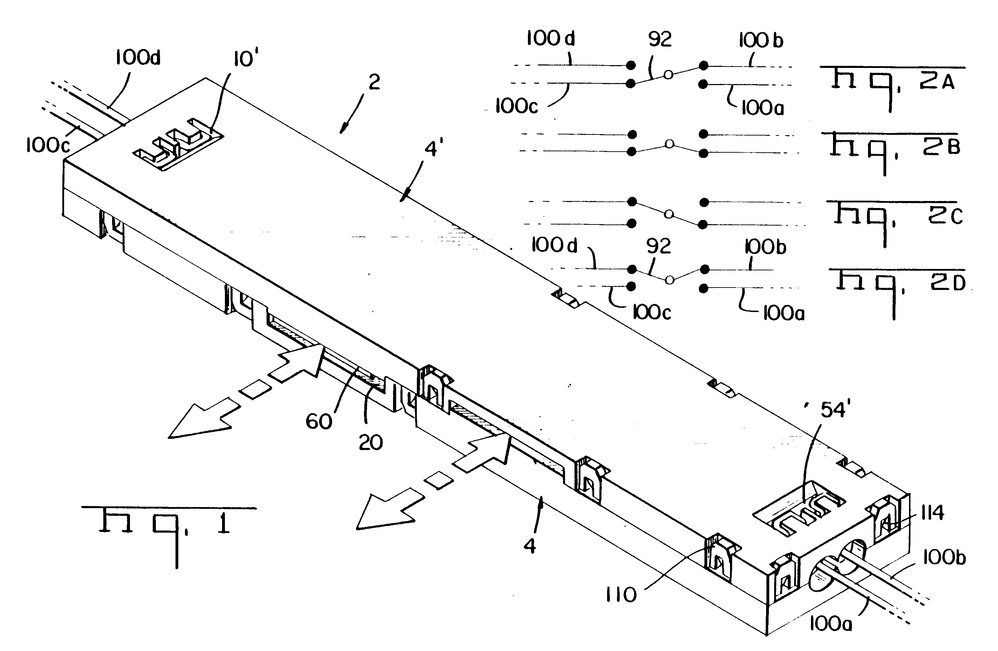

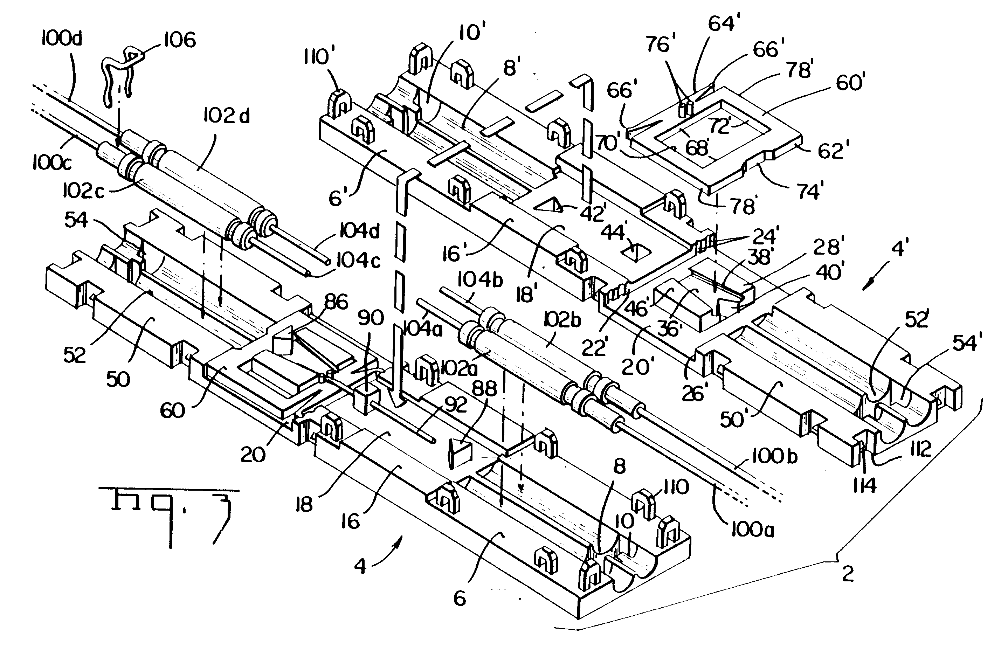

Figure 1 shows an isometric view of the fiber optic switch of the instant invention in which the switch includes a plurality of switched interconnections thereby interconnecting optical fibers 100a-100d. More specifically, the switched locations are shown in Figure 2A-2D schematically whereby the optical fibers 100a-100d are interconnected by an intermediate optical fiber such as 92. The fiber optic switch includes two optical fibers at each end such as 100a and 100b, and two optical fibers at the opposite end such as 100c and 100d, lending to a multiple of four switched positions, as shown in Figures 2A-2D; thus, the switch is typically referred to as a two by two switch.

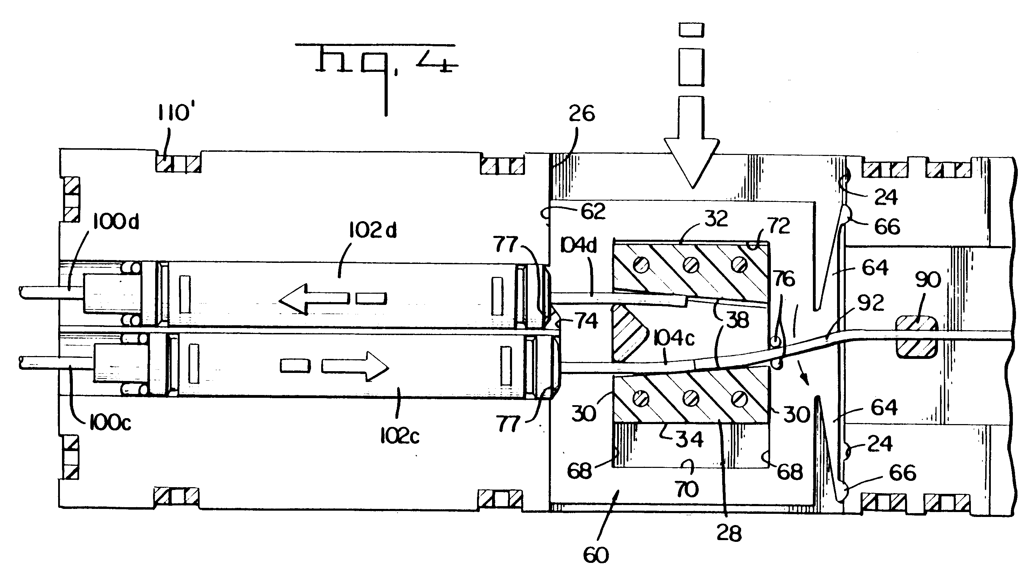

With reference to Figure 3, the switch of the instant invention will be described in greater detail. The switch 2 includes two identical, or hermaphroditic, switch housing halves such as 4 and 4', thus while describing the details of the housing halves, only one such half will be described. It should be understood that the other housing half includes an identical component or characteristic as the one being described. It should also be noted that the second switch housing half is numbered in prime numerals to indicate the like component on the first switch housing half.

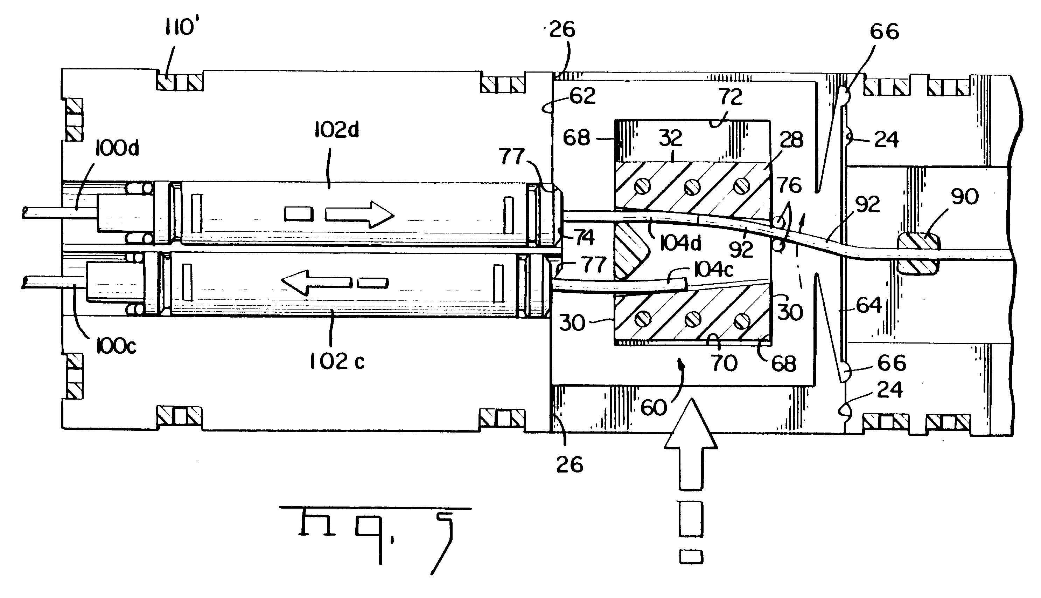

Referring first to switch housing half 4', it should be noted that a first end includes a surface 6' with semicircular fiber optic receiving troughs 8' therein. Proximate the ends of the troughs 8' and located in each trough 8' are U-shaped recesses 10'. Towards the center of the switch housing half 4' are raised surfaces 16' with a recessed surface 18' intermediate the raised surfaces 16'. Recesses 44' and 42' extend into the surface 18' and their function will be described in greater detail subsequently. The second end of the switch housing half 4' includes a switching surface 20' which is bounded by side walls 22' and 26' and includes an island 28' symmetrically located centrally of the side walls and along the axial centerline of the switch housing half. Referring momentarily to Figure 4, it should be noted that the island 28 includes side walls 30 and a first end wall 32 and a second end wall 34. Referring back to Figure 3 shows that the island 28' includes a recess 36' along the axial centerline of the island and includes two V-grooves 38' which converge towards the center of the switch housing half 4', as will be described subsequently. The island 28' further includes a recess 40' which in combination with recess 42' are symmetrically located with respect to the center recess 44'. It should also be noted that the side wall 22' includes two detent notches 24' located adjacent to each outer edge. The switch housing half 4' further includes a second fiber optic receiving end having a surface 50' which again includes two fiber optic receiving troughs such as 52'. Each trough 52' includes a U-shaped recess 54'.

A switching plate such as 60' includes a first side wall 62' and oppositely facing spring fingers 64' including detent nodes such as 66'. The switching plate 60' further includes inner side walls 68' and inner end walls 70' and 72'. It should be noted that the inner side walls 68' and inner end walls 70' and 72' collectively define a recess to be received over the island 28' Located on surface 20' of the switching housing half 4'. Switching plate 60' further includes a recess 74' along the side wall 62' centrally located therealong. Switching plate 60' also includes two pins 76' upstanding from the upper surface of the plate.

Still referring to Figure 3, shows that the switch assembly 2 further comprises optical fibers such as 100a-d which include fiber optic connectors such as 102a-d thereon allowing a free end 104 a-d of the fibers to extend from the end of the connectors. The connectors could be of the type shown in our U. S. Patents 4,435,038; and 4,669,820. Although a connector is described, a band portion could be included around the fiber adding further rigidity as required for the switching operation. As mentioned earlier, the optical fibers are plated externally with a metallic coating to provide a resilient nature to the optical fiber. For this reason, the device comprising the plated optical fiber is sometimes referred to as an optical needle.

The switch assembly 2 is assembled by placing the switching plates 60 and 60' over the respective islands 28 and 28' and between side walls 22 and 26. The switching plates 60 and 60' are so profiled that the spring fingers are in a resiliently biased condition when placed between the side walls 22 and 26 such that the spring fingers bias the side wall 62 of the switch plate against the side wall 26 of the switch housing half 4. An intermediate optical fiber 92, which includes an integrally formed insert such as 90, is then placed within the aperture 44 of the center of the plate 4 with free ends of the needle 92 laced between respective pins 76 of the switch plate 60. The inserts 86 and 88 are also inserted at this time, into respective apertures 40 and 42. It should be noted that the housing half 4' includes apertures 40', 42' and 44' which will overlie the respective inserts 88, 86 and 90, thereby retaining the inserts in a fixed relationship. The switch housing half 4' further includes complementary troughs 52' and 8' which will overlie the troughs 8 and 52, respectively. Each switch housing half includes latching arms such as 110, 110' and complementary recesses 112, 112' including latching surfaces 114, 114' thereby latching the two housing halves together.

Once the two housing halves 4, 4' are latched together, the fiber optic connectors 102a-d are then slid into place from the openings formed by the overlapping troughs, with the fiber optic ends 104a-d, respectively, located within the V-grooves such as 38. The connectors are placed within the openings such that the optic fiber ends are positioned between the inserts 86, 88 and between the V-grooves 38, 38'. As noted before, the V-grooves 38 are inwardly converging and the exterior of the optical fibers are plated with a metallic material, such that the fiber optic ends 104a and 104b become spring biased within the V-grooves 38.

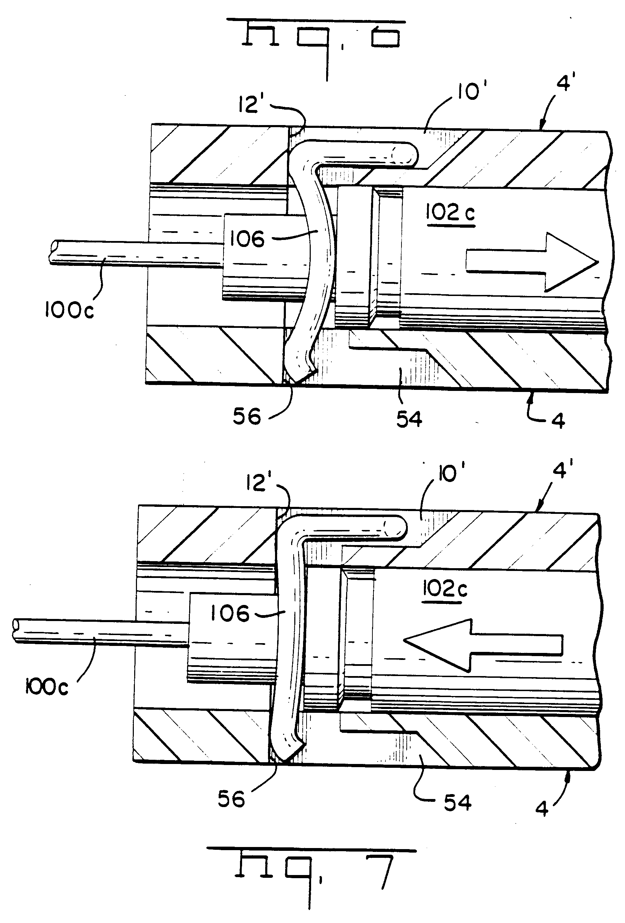

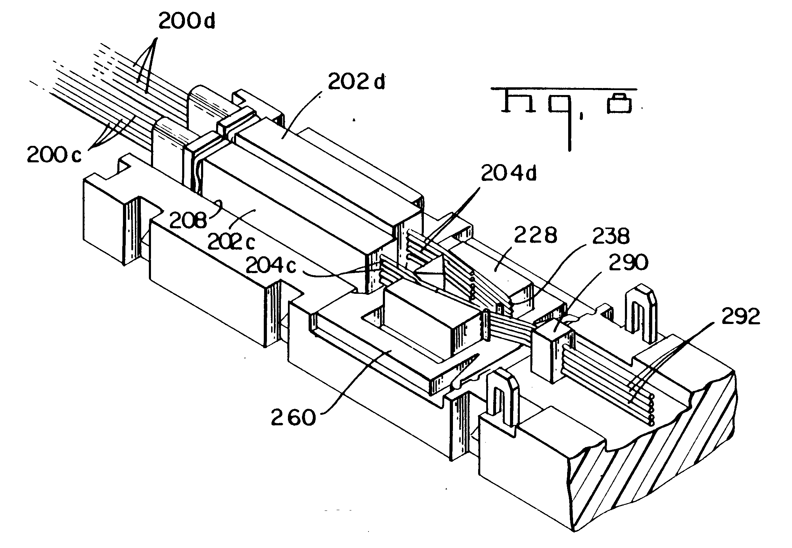

Once the two housing halves are sandwiched together and the connectors 102a-d are inserted, U-shaped retaining springs such as 106 can be placed within the spring receiving apertures formed by recess 10 and 54' at one end and 10' and 54 at the opposite end. As shown in Figure 6, the recess 10' includes a back surface 12' while the recess 54 includes a rear surface 56. Thus, the U-shaped spring 106 is spring biased against an end of the fiber optic connectors 102a-102d and end surfaces 12' and 56. It should be understood by the sequence of assembly that the connectors and associated optic fibers are removable and reinsertable without disassembling the housing halves. With the switch so assembled, the operation can be described in greater detail.

Referring to Figure 4, the switch plate 60 is shown in a lower position where end wall 32 of the island 28 is adjacent to the end wall 72 of the switch plate while inner end wall 70 of the switch plate is spaced from the end wall 34 of the island 28. It should be noted that the switch plate 60 is movable in the opposite direction, to a position as shown in Figure 5, to the extent of the space between surfaces 34 and 70. It should also be noted that the pairs of detents 24 are appropriately spaced such that the detent nodes 66 on the spring fingers 64 are appropriately located within the detents 24 when the switch plate is moved into the upper or lower position. As shown in Figure 4, the intermediate optical fiber 92 is placed between the two pins 76 on the switch plate which retains the optical fiber 92 in a resiliently biased condition within the V-groove 38 of the island such that the two end faces of the optical fibers 104c and 92 are in an abutting condition. An important aspect of the instant invention is that the switch plate 60 includes the recess 74 which allows the fiber optic connectors 102a-d to be axially movable within their respective trough such that the end face of the optical fibers 104a-d are movable towards and away from the end faces of optical fiber 92. It is important for the optical transmission of the signals for the end faces to be in an abutting relationship. However, it is detrimental to the durability of the end faces, if the end faces of the optical fibers are in an abutting relationship when the abutting fibers are switched out of a mating relationship, as the movement of the two fibers transversely can harm the end optical surfaces of the fibers. Advantageously, the recess 74 includes ramped surface such as 76, which cams against the end of one of the respective connectors such as 102c or 102d, to move the connector away from and out of an abutting relationship with the optical fiber 92.

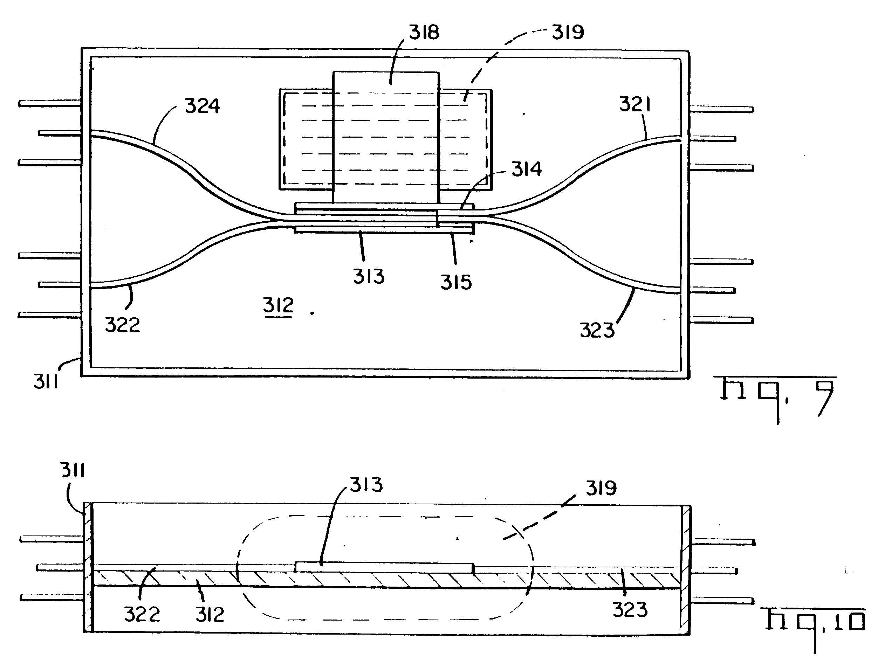

For example, Figure 4 shows connector 102c forward of the connector 102d such that the inward end of the connector 102c lies within the recess 74 of the switch plate 60. This allows the end face of optical fiber 104d to be in an abutting relationship with the end face of the intermediate optical fiber 92. However, when the switch plate 60 is moved upward to the position shown in Figure 5, the camming surface 76 moves the connector 102c rearwardly, taking the end face of the optical fiber 104c out of an abutting relationship with the end face of the optical fiber 92 prior to the transverse movement of the two faces across each other. When the switch plate 60 is moved into its fully upward position, as shown in Figure 5, the fiber optic connector 102d can then move inwardly into the recess 74 and the end face of the optical fiber 104d can move into an abutting relationship with the end face of the optical fiber 92. Figures 6 and 7 illustrate how the U-shaped retaining spring is located within the apertures formed by the respective recesses 10 and 54 such that the U-shaped clips maintain a constant inward force on the ends of the connector. Thus, Figure 6 would be illustrative of the position of fiber optic connector 102c in the position shown in Figure 4, while Figure 7 would be illustrative of the fiber optic connector 102d shown in Figure 4.

Advantageously, the spring fingers 64 retain the plate 60 within the housing half 4 such that the side edge 62 is in an abutting manner against the sidewall 26. In this manner, the detents 24 and spring fingers 64 have a positive latching position. The ends of the connectors 102c, 102d, adjacent to the recess 74, are actually in a noncontacting relationship with the recess 74. In this manner, the end faces of the optical fibers 104c, 104d are axially spring loaded into the end faces of the optical face of the intermediate needle. In this manner, the two mating needle faces are axially spring loaded and, furthermore, this allows more tolerance within the system design. Over extension of the end faces of the optical fibers 104a-d is allowable as the intermediate optical fiber 92 is somewhat free to move at each end within respective pins 76, 76'. The two end faces will however, always be in a biased relationship against each other as the plated optical fiber spring loads the two end faces together.

As best shown in Figure 1, the two housing halves include openings for access to the end walls 78 and 78' of the switch plates 60, 60' such that the switch plates can be activated by means exterior of the switch housing formed by the two housing halves 4 and 4'. If a simple switching operation is to be used where simultaneous and instantaneous switching is not required, the switch plates 60 could simply include tabs which would protrude through the recesses for manual switching by an operator's hand. However, if simultaneous and instantaneous switching is required, such as where a new fiber optic cable is being inserted within a transmission line where the length of the new optical fiber being inserted is substantial, the switches 2 could include an electromechanical switching mechanism such as a solenoid which could be activated by a radiocontrolled mechanism. In this manner, the switches at opposite ends could be activated instantaneously thereby precluding transmission loss within the fiber.

The preferred embodiment of the invention includes an optical fiber which is externally plated with a metallic coating, which provides several advantages not before available in such switches. By using an optical needle for the switching media, the switching mass is reduced to a minimum to allow high speed switching with low bounce. Furthermore, by using an optical needle, the needle provides for its own spring force maintaining the needle accurately within its alignment grooves, without the necessity of an external compression member.

Further advantages relate to the superior alignment characteristics of the needles which in effect relates to a superior interconnection. First, an optical needle can be precisely plated such that the optical fiber can be eccentric relative to the plating diameter. In this manner, the alignment of the centers of the fibers is precisely aligned by placing each of the fibers in an alignment means such as a V-groove. Secondly, fibers can be prepared in such a manner to eliminate such reflection losses as Fresnell losses, by including as part of the exterior plating, convex endfaces. Alternatively, the needles can include an anti-reflection coating on the needle ends with the fiber recessed from the end of the coating. This coating is not possible with other connectors as other connectors include such ingredients as glues, which cannot withstand the extreme temperatures, as can the optical needle.

By using an optical needle as the switching media, a double switch can be made such that at both sides of a manhole, switching is possible. This is due to the quality of the alignment of the two ends of the needle. In fact the losses with this switch can be maintained within 1db over the total switch.

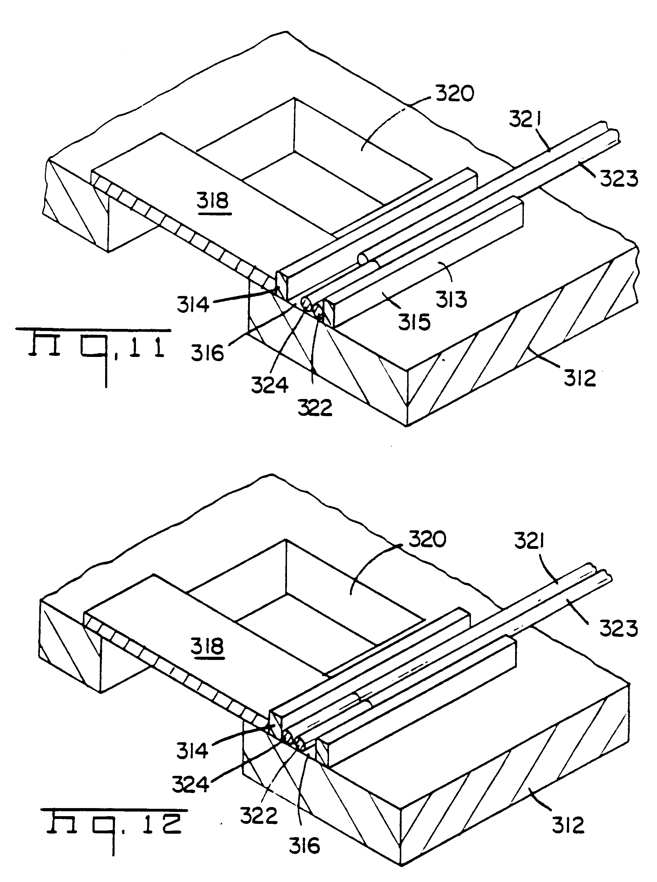

As a second embodiment of the instant invention, attention is drawn to Figure 8 in which an array of needles, typically referred to as a ribbon fiber cable, are used as the switching media rather than a single needle. For simplicity, Figure 8 only shows a cutaway portion of the switch, although it should be understood that the housing halves 204, 204' are identical.

In this embodiment, several intermediate needles 292 are included which can be switched into and out of contact with the optic fibers 204a-d. The island 228 includes a plurality of V-grooves to receive the respective needles to align the optic fiber ends with the ends of the intermediate optic fiber 292. The housing half 204 includes square channels 208 to receive the arrays of optic fibers which are interconnected by a connector for ribbon fiber cable, or simply by a splicing box in which the several fibers are fused or adhesively affixed within the splice box. In all other respects, the second embodiment is the same as the first embodiment, the housings are of course modified somewhat to accomodate the plurality of optic fibers.

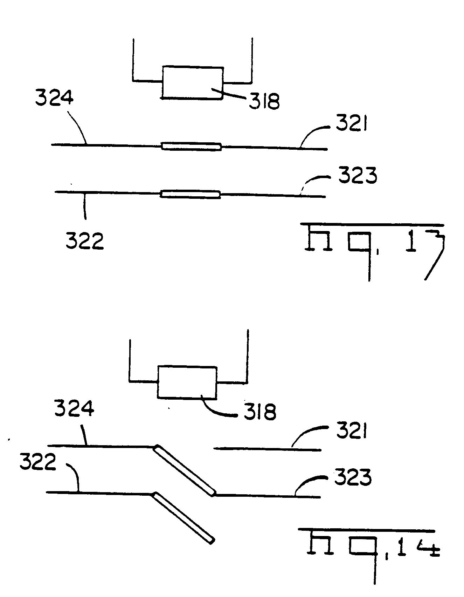

As a result of the intermediate needle being plated with a metallic material, the intermediate needle is also applicable with the use of a magnet to control the movement of the needle. As shown particularly in Figures 9 and 10, as a further embodiment of the instant invention, an electromagnetic switch comprises an outer, rectangular, housing frame 11 supporting a base plate 312, at a central area of which is mounted an optical fibre alignment channel 313. The channel comprises first and second sidewalls 314 and 315 and a floor 316, and is precisely dimensioned to be of width equal to treble the diametric width of end portions of optical fibres.

The solenoid 318 of an electromagnet 319 is also mounted on the base plate adjacent the channel to extend perpendicularly away from a central location of the channel, the windings being received in a cut-out 320 in the base plate (Figures 11 and 12).

Four discrete lengths of optical fibres 321-324, which have been electroplated to provide a ferromagnetic metal coating of constant thickness and each formed with optical faces on opposite ends as described in the above-mentioned patent application, are mounted within the frame. The coated fibres 321 and 323 are each secured at one end in laterally spaced-apart relation in the frame 311 so that they extend out of the housing for splicing or releasably plugging to fibres of a subscriber or work station and a network ring, respectively, using the method described in the above-mentioned patent application. Their other end portions enter one end of the channel 313 and are fixed therein to extend along the floor 316 in the same sense and in side-by-side abutment with optical end faces coplanar and the end portion of fibre 321 in abutment with the corner defined between channel sidewall 314 and the floor 316.

The coated fibres 322 and 324 are similarly secured at one and in laterally spaced-apart relation in the frame 311 to extend out of the housing for similar splicing or direct releasable connection to fibres of the subscriber or work station and of the network ring, respectively. Their other end portions enter the other end of the channel and are joined together to extend along the floor 316 in the same sense and in side-by-side abutment with optical end faces coplanar. The coated fibre has a stiffly resilient property, the two fibres resembling a wishbone spring, enabling the joined ends to be laterally biased towards the sidewall 315 of the channel with the end portion of fibre 322 abutting the corner defined between sidewall 315 and the floor 316, as shown in Figures 9 and 11. In this condition, the switch is OFF and the optical faces only of fibres 323 and 324 are aligned so that the network ring, of which fibre 323 is the emitter and fibre 324 the receiver, is closed excluding the subscriber or work station linked to fibres 321 and 322. This is the circuit condition shown in Figure 13.

Operation of the electromagnet moves end portions of fibres 322 and 324 together laterally across the channel until the end portion of fibre 324 abuts the corner defined at sidewall 314. In this condition, the ON condition of the switch, the subscriber or work station is linked or hooked into the network ring by reason of the optical alignment of optical faces of fibres 321 and 324, and 322 and 323, respectively, as shown in Figures 12 and 14.

The precise dimensioning of the channel width ensures precise optical alignment of the fibres in both switch positions, minimizing interface transmission losses, while the switch structure is extremely simple and compact, requiring few parts, facilitating economic manufacture. An additional advantage is that the switch can be used as a connector, as the coated end portions are of sufficient size and strength to be plugged directly into a connector of complementary shape.

The instant invention was described by way of preferred embodiments but they should not be taken to limit the scope of the claims; the appended claims being added for that purpose.

## Claims

1. An optical switch for varying the light path of an optical fiber, including first optical fiber (92) having a secured end and a free end, actuator means (60,76) for switching the free end of the fiber between first and second positions placing the free end of the first optical fiber (92) into optional abutment with end faces of either a second or a third optical fiber (104a,104d) within a switch housing (4,4'), and alignment means (28) for alternatively optically aligning the first fiber (92) with either the second or the third fiber (104a,104d) with the end faces of the fibers (92,104a,104d) in optical abutment, wherein the alignment means (28) includes two V-grooves (38,38') within the switch housing (4,4') facing each other with the first optical fiber (92) disposed in the space between the two facing V-grooves (38,38'), the actuator means (60,76) being operable to move the first fiber (92) between the two facing V-grooves into optical alignment with either the second or the third fiber (104a,104d); characterized in that each of the optical fibers (92,104a,104d) has an exterior coating of a metallic plated material providing a resilient fiber end portion on each of the fibers (92,104a,104d), the resilience of the end portions of the second and third fibers (104a,104d) spring loading said end portions within, and against the surface of the respective V-groove (38,38') to provide precise alignment of said abutting fiber ends.

2. An optical switch according to claim 1, characterized in that the alignment means includes means for moving the second (104a) or third (104d) optical fiber along an axial path out of abutting relationship with the first optical fiber (92) during transverse movement of the opposed ends of those fibers, and the second or third optical fiber (104a,104d) into abutting relationship with the first optical fiber when the ends of those fibers are aligned.

3. An optical switch according to claim 2, characterized in that the second (104a,104c) and third (104b,104d) optical fibers include a band (102a,102c,102b,102d) recessed from the end of the fiber and the moving means includes a plate member (60,60') movable in a transverse direction relative to the length of the fibers (104a-d), the plate member (60,60') including a recessed portion (74,74') at one side which faces the band, the plate member being movable between first and second positions in which the recessed portion (74,74') comes into and out of alignment with the second (104a,104c) and third (104b,104d) fibers, a fiber in alignment with the recessed portion (74,74') moving axially forward and into an abutting relationship with the end of the first fiber (92).

4. An optical switch according to claim 3, characterized in that the plate (60,60') includes a spring means (64,64') which spring loads said switch plate (60,60') towards said bands (102a-d).

5. An optical switch according to claim 1, characterized in that the actuator means includes an actuator plate (60,60') which is guided relative to the two grooves (38,38') and which includes means (76,76') for retaining said fiber (92) at a location distant from a free end of said first fiber (92) allowing a length of said fiber to be freely movable within said grooves (38,38') into and out of alignment with the second (104a,104c) and third (104b,104d) fibers, upon transverse movement of the actuator plate (60,60') relative to the lengths of the optical fibers.

6. An optical switch according to claim 5, characterized in that the two grooves (38,38') are formed within an island (28,28') having two side walls (30,30') and end walls (32,34,32',34'), the grooves (38,38') being formed in a substantially transverse direction relative to the length of the island (28,28') as measured between the two side walls (30,30') the actuator plate (60,60') having a recess receiving the island (28,28') and including two side edges (68,68') profiled for close registration with the side walls (30,30') of the island (28,28'), and two end edges (70,72,70',72') of the recess are spaced apart by a distance greater than the distance between the end walls (32,34,32',34') of said island (28,28').

7. An optical switch according to claim 1, characterized in that the actuator means comprises a switching plate (60,60') movable transversely of the grooves (38,38') and including means (76) for affixing an end of the first fiber (92) thereto, the transverse movement of the plate (60,60') transferring the first fiber (92) into optical alignment with either the second (104a,104c) or third (104b,104d) fiber, the plate (60,60') further comprising a recessed portion (74) in a side edge (62) thereof, and in that the second (104a,104c) and third (104b,104d) optical fibers include a band (102a,102c,102b,102d) therearound, with the recessed portion (74) in the side edge of the switching plate (60,60') being movable between first and second switching positions wherein, in a first portion, one of the fibers (104a-c) is in optical alignment with the first said fiber (92), and when the switch is moved from the first to a second position, the recessed portion (74) cams against the band portion (102a-c) of the one fiber moving the one fiber out of an abutting relationship with the first fiber (92) and the first said fiber (92) is moved into optical alignment with the other of said fibers, and when the recessed portion (74) is moved into alignment with the band portion (102a-c) on the other fiber, the other fiber moves axially into the recessed portion (74) and into an abutting relationship with the first (92) said fiber.

8. An optical switch for varying the light path of an optical fiber, including a first optical fiber (292) which is movable between first and second positions which places the first optical fiber (292) into alignment with either a second (204a,204c) or third (204b,204d) optical fiber, and alignment means for aligning the first (292) and second (204a,204c), and the first (292) and third (204b,204d) optical fibers in alignment with end faces of the fibers in a facing relationship, the alignment means including two channels (238,238') extending substantially along the length of the second and third fibers (204a-d) and the first said fiber (292) being movable between the two channels (238,238') into and out of alignment with the second (204a,204c) and third (204b,204d) fibers, the switch being characterized in that a plurality of first optical fibers (292) are included which upstand in a direction which is transverse to their length, and a like plurality of second (204a,204c) and third (204b,204d) optical fibers are included, the movement of the first optical fibers (292) causing the alignment between respective first optical fiber ends with either the second optical fiber ends or the third optical fiber ends; and in that each of the optical fibers (292,204a,204d) is received in a V-groove and has an exterior coating of a metallic plated material providing a resilient fiber end portion on that fiber, the resilience of the end portions of the second and third fibers (204a,204d) spring loading said end portions within, and against the surface of, the respective V-groove to provide precise alignment of the respective first optical fiber ends with either the second optical fiber ends or the third optical fiber ends.

## Patentansprüche

1. Optischer Schalter zur Veränderung des Lichtweges einer optischen Faser, umfassend eine erste optische Faser (92) mit einem befestigten und einem freien Ende, ein Betätigungsmittel (60,76) zum Umschalten des freien Endes der Faser zwischen einer ersten und einer zweiten Stellung, indem das freie Ende der ersten optischen Faser (92) in optischer Anlage zu den Endflächen einer zweiten oder einer dritten optischen Faser (104a, 104d) innerhalb eines Schaltergehäuses (4') verbracht wird, und ein Ausrichtmittel (28) zur alternativen fluchtenden optischen Ausrichtung der ersten Faser (92) mit der zweiten oder der dritten Faser (104a, 104d) bei optischer Anlage der Endflächen der Fasern (92, 104a, 104d), wobei das Ausrichtmittel (28) über zwei einander zugewandte V-förmige Nuten (38') innerhalb des Schaltergehäuses (4, 4') verfügt, die erste optische Faser (92) in dem Raum zwischen den beiden einander zugewandten V-förmigen Nuten (38, 38') angeordnet ist und das Betätigungsmittel (60, 76) betätigbar ist, um die erste Faser (92) zwischen den beiden einander zugewandten V-förmigen Nuten in fluchtende optische Ausrichtung mit der zweiten oder der dritten Faser (104a, 104d) zu verbringen, **dadurch gekennzeichnet**, daß jede der optischen Fasern (92, 104a, 104d) eine Außenbeschichtung aus einem aufplattierten Metallmaterial aufweist, die einen nachgiebigen Faserendabschnitt an jeder der Fasern (92, 104a, 104d) bildet, wobei die Nachgiebigkeit der Endabschnitte der zweiten und der dritten Faser (104a, 104d) die genannten Endabschnitte innerhalb der zugehörigen V-förmigen Nut (38, 38') unter Federbelastung hält und gegen die Fläche derselben drückt, um eine genaue Ausrichtung der aneinander anliegenden Faserenden zu schaffen.

2. Optischer Schalter nach Anspruch 1, **dadurch gekennzeichnet**, daß das Ausrichtmittel ein Mittel zur Bewegung der zweiten (104a) oder der dritten (104d) optischen Faser entlang eines Axialweges aus der anliegenden Beziehung zur ersten optischen Faser (92) während der Querbewegung der einander gegenüberliegenden Enden dieser Fasern und der zweiten oder dritten optischen Faser (104a, 104d) zur anliegenden Beziehung zur ersten optischen Faser umfaßt, wenn die Enden dieser Fasern fluchtend aufeinander ausgerichtet sind.

3. Optischer Schalter nach Anspruch 2, **dadurch gekennzeichnet**, daß die zweite (104a, 104c) und die dritte (104b und 104d) optische Faser ein Band (102a, 102c, 102b, 102d) aufweist, das gegenüber dem Ende der Faser ausgespart ist, und das das Bewegungsmittel ein Plattenteil (60, 60') aufweist, daß in einer Querrichtung hinsichtlich der Länge der Fasern (104a-d) bewegbar ist, wobei das Plattenteil (60, 60') einen ausgesparten Abschnitt (74,74') an einer Seite aufweist, die dem Band zugewandt ist, wobei das Plattenteil zwischen einer ersten und einer zweiten Stellung bewegbar ist, in denen der ausgesparte Bereich (74,74') mit der zweiten (104a, 104c) und der dritten (104b, 104d) Faser in fluchtende Ausrichtung kommt oder aus der fluchtenden Ausrichtung herauskommt, wobei eine mit dem ausgesparten Bereich (74, 74') in fluchtender Ausrichtung stehende Faser axial nach vorn und in anliegende Beziehung zu dem Ende der ersten Faser (92) bewegt wird.

4. Optischer Schalter nach Anspruch 3, **dadurch gekennzeichnet**, das die Platte (60, 60') ein Federmittel (64, 64') aufweist, daß die Schaltplatte (60, 60') in Richtung auf die Bänder (102a-d) federbelastet drückt.

5. Optischer Schalter nach Anspruch 1, **dadurch gekennzeichnet**, daß das Betätigungsmittel eine Betätigungsplatte (60, 60') aufweist, die relativ zu den beiden Nuten (38, 38') geführt ist und Mittel (76, 76') zum Festhalten der Faser (92) an einer Stelle in einem Abstand von einem freien Ende der ersten Faser (92) aufweist, was zuläßt, daß ein Längenabschnitt der Faser innerhalb der Nuten (38, 38') frei in fluchtende Ausrichtung mit der zweiten (104a, 104c) und der dritten (104b, 104d) Faser und aus dieser fluchtenden Ausrichtung heraus frei bewegbar ist, und zwar bei Querbewegung der Betätigungsplatte (60, 60') relativ zu den Längenabschnitten der optischen Fasern.

6. Optischer Schalter nach Anspruch 5, **dadurch gekennzeichnet**, daß die beiden Nuten (38, 38') innerhalb einer Insel (28, 28') mit zwei Seitenwänden (30, 30') und Stirnwänden (32, 34, 32', 34') ausgebildet sind, wobei die Nuten (38, 38') in einer im wesentlichen quer verlaufenden Richtung hinsichtlich der Länge der Insel (28, 28') gemessen zwischen den beiden Seitenwänden (30, 30') ausgebildet sind, wobei die Betätigungsplatte (60, 60') eine die Insel (28, 28') aufnehmende Aussparung aufweist und über zwei Seitenränder (68a, 68') in Profilierung für die enge Zusammenpassung mit den Seitenwänden (30, 30') der Insel (28, 28') verfügt und die beiden Endränder (70, 72, 70', 72') der Aussparung um einen Abstand größer als der Abstand zwischen den Stirnwänden (32, 34, 32', 34') der Insel (28, 28') beabstandet sind.

7. Optischer Schalter nach Anspruch 1, **dadurch gekennzeichnet**, daß das Betätigungsmittel über eine Schaltplatte (60, 60') verfügt, die quer zu den Nuten (38, 38') bewegbar ist und Mittel (76) zur Befestigung eines Endes der ersten Faser (92) aufweist, wobei die Querbewegung der Platte (60, 60') die erste Faser (92) in optische fluchtende Ausrichtung entweder mit der zweiten (104a, 104c) oder der dritten (104b, 104d) Faser überführt, die Platte (60, 60') des weiteren einen ausgesparten Abschnitt (74) in einem Seitenrand (62) aufweist, und daß die zweite (104a, 104c) und die dritte (104b, 104d) optische Faser ein um sie herum geführtes Band (102a, 102c, 102b, 102d) aufweisen, wobei der ausgesparte Bereich (74) in dem Seitenrand der Schaltplatte (60, 60') zwischen einer ersten und einer zweiten Schaltstellung bewegbar ist, wobei in einem ersten Bereich eine der Fasern (104a-c) in optischer fluchtender Ausrichtung mit der ersten Faser (92) steht und, wenn der Schalter aus der ersten in eine zweite Stellung bewegt wird, der ausgesparte Bereich (74) mit dem Bandbereich (102a-c) der einen Faser kämmt, wobei die eine Faser aus der anliegenden Beziehung zu der ersten Faser (92) heraus bewegt und die erste Faser (92) in optische, fluchtende Ausrichtung mit der anderen Faser bewegt wird, und wenn der ausgesparte Bereich (74) in fluchtende Ausrichtung zu dem Bandbereich (102a-c) an der anderen Faser gebracht wird, sich die andere Faser axial in den ausgesparten Bereich (74) und in anliegende Beziehung der ersten Faser (92) bewegt.

8. Optischer Schalter zur Veränderung des Lichtweges einer optischen Faser umfassend eine erste optische Faser (292), die zwischen einer ersten und einer zweiten Stellung bewegbar ist, der die erste optische Faser (292) in fluchtende Ausrichtung zu entweder einer zweiten (204a, 204c) oder einer dritten (204b, 204d) optischen Faser bringt, und Ausrichtmittel zum fluchtenden Ausrichten der ersten (292) und der zweiten (204a, 204c) und der ersten (292) und der dritten (204b, 204d) optischen Faser in fluchtender Ausrichtung mit den Endflächen der in einander zugewandter Beziehung stehenden Fasern, wobei die Ausrichtmittel zwei Kanäle (238, 238) umfassen, die sich im wesentlichen entlang der Länge der zweiten und der dritten Faser (204a-d) erstrecken, und wobei die erste Faser (292) zwischen den beiden Kanälen (238, 238') in fluchtende Ausrichtung mit der zweiten (204a, 204c) und der dritten (204b, 204d) Faser und aus dieser fluchtenden Ausrichtung heraus bewegbar ist, **dadurch gekennzeichnet**, daß eine Vielzahl von ersten optischen Fasern (292), die in einer Richtung quer zu ihrer Länge übereinander liegen, und eine gleiche Vielzahl von zweiten (204a, 204c) und von dritten (204b, 204d) optischen Fasern vorgesehen sind, wobei die Bewegung der ersten optischen Fasern (292) die fluchtende Ausrichtung zwischen den ersten optischen Faserenden mit entweder den zweiten optischen Faserenden oder den dritten optischen Faserenden bewirkt, und daß jede der optischen Fasern (292, 204a, 204d) in einer V-förmigen Nut aufgenommen ist und eine äußere Beschichtung aus einem aufplattierten metallischen Material aufweist, das einen nachgiebigen Faserendabschnitt an der Faser ausbildet, wobei die Nachgiebigkeit der Endabschnitte der zweiten und der dritten Faser (204a, 204d) die Endabschnitte innerhalb der zugehörigen V-förmigen Nut und gegen die Fläche derselben federbelastet drückt, um eine genaue fluchtende Ausrichtung der ersten optischen Faserenden zu den zweiten optischen Faserenden oder den dritten optischen Faserenden zu schaffen.

## Revendications

1. Commutateur optique destiné à faire varier le trajet lumineux d'une fibre optique, comprenant une première fibre optique (92) ayant une extrémité assujettie et une extrémité libre, des moyens actionneurs (60, 76) destinés à commuter l'extrémité libre de la fibre entre des première et seconde positions plaçant l'extrémité libre de la première fibre optique (92) en butée optique avec des faces extrêmes d'une deuxième ou d'une troisième fibre optique (104a, 104d) à l'intérieur d'un corps (4, 4') de commutateur, et des moyens d'alignement (28) destinés à aligner optiquement en alternance la première fibre (92) avec la deuxième ou la troisième fibre (104a, 104d), les faces extrêmes des fibres (92, 104a, 104d) étant en butée optique, les moyens d'alignement (28) comprenant deux gorges (38, 38') en V à l'intérieur du corps (4, 4') du commutateur, qui se font face, la première fibre optique (92) étant disposée dans l'espace entre les deux gorges en V (38, 38') face à face, les moyens actionneurs (60, 76) pouvant être manoeuvrés de façon à amener la première fibre (92) entre les deux gorges en V face à face en alignement optique avec la deuxième ou la troisième fibre (104a, 104d) ; caractérisé en ce que chacune des fibres optiques (92, 104a, 104d) comporte un revêtement extérieur d'une matière métallique déposée formant un tronçon extrême de fibre élastique sur chacune des fibres (104a, 104d), l'élasticité des tronçons extrêmes des deuxième et troisième fibres (104a, 104d) appliquant une charge de ressort auxdits tronçons extrêmes à l'intérieur et contre la surface de la gorge en V respective (38, 38') pour réaliser un alignement précis desdites extrémités des fibres en butée.

2. Commutateur optique selon la revendication 1, caractérisé en ce que les moyens d'alignement comprennent des moyens destinés à déplacer la deuxième (104a) ou troisième (104d) fibre optique le long d'un trajet axial hors de la disposition en butée avec la première fibre optique (92) durant un mouvement transversal des extrémités opposées de ces fibres, et à amener la deuxième ou troisième fibre optique (104a, 104d) en relation de butée avec la première fibre optique lorsque les extrémités de ces fibres sont alignées.

3. Commutateur optique selon la revendication 2, caractérisé en ce que les deuxième (104a, 104c) et troisième (104b, 104d) fibres optiques comprennent un manchon (102a, 102c, 102b, 102d) en retrait de l'extrémité de la fibre et les moyens de déplacement comprennent un élément à plaque (60, 60') mobile dans une direction transversale par rapport à la longueur des fibres (104a-d), l'élément à plaque (60, 60') comprenant une partie évidée (74, 74') sur un côté qui fait face au manchon, l'élément à plaque étant mobile entre des première et seconde positions dans lesquelles la partie évidée (74, 74') vient en alignement et hors d'alignement avec les deuxième (104a, 104c) et troisième (104b, 104d) fibres, une fibre en alignement avec la partie évidée (74, 74') se déplaçant axialement vers l'avant et jusqu'en relation de butée avec l'extrémité de la première fibre (92).

4. Commutateur optique selon la revendication 3, caractérisé en ce que la plaque (60, 60') comprend un moyen à ressort (64, 64') qui applique une charge de ressort à ladite plaque de commutation (60, 60') en direction desdits manchons (102a-d).

5. Commutateur optique selon la revendication 1, caractérisé en ce que les moyens actionneurs comprennent une plaque d'actionnement (60, 60') qui est guidée par rapport aux deux gorges (38, 38') et qui comprend des moyens (76, 76') destinés à retenir ladite fibre (92) en un emplacement éloigné d'une extrémité libre de ladite première fibre (92), permettant à une longueur de ladite fibre de se déplacer librement à l'intérieur desdites gorges (38, 38') pour venir en alignement et hors d'alignement avec les deuxième (104a, 104c) et troisième (104b, 104d) fibres, à la suite d'un mouvement transversal de la plaque d'actionnement (60, 60') par rapport aux longueurs des fibres optiques.

6. Commutateur optique selon la revendication 5, caractérisé en ce que les deux gorges (38, 38') sont formées à l'intérieur d'un îlot (28, 28') ayant deux parois latérales (30, 30') et des parois extrêmes (32, 34, 32', 34'), les gorges (38, 38') étant formées dans une direction sensiblement transversale par rapport à la longueur de l'îlot (28, 28') telle que mesurée entre les deux parois latérales (30, 30'), la plaque d'actionnement (60, 60') présentant un évidement recevant l'îlot (28, 28') et comprenant deux bords latéraux (68, 68') profilés de façon à s'aligner étroitement avec les parois latérales (30, 30') de l'îlot (28, 28'), les deux bords extrêmes (70, 72, 70', 72') de l'évidement étant espacés d'une distance supérieure à la distance comprise entre les parois extrêmes (32, 34, 32', 34') dudit îlot (28, 28').

7. Commutateur optique selon la revendication 1, caractérisé en ce que les moyens actionneurs comprennent une plaque de commutation (60, 60') mobile transversalement aux gorges (38, 38') et comprenant des moyens (76) destinés à y fixer une extrémité de la première fibre (92), le mouvement transversal de la plaque (60, 60') transférant la première fibre (92) jusqu'en alignement optique avec la deuxième (104a, 104c) ou troisième (104b, 104d) fibre, un bord latéral (62) de la plaque (60, 60') comprenant en outre une partie évidée (74), et en ce que les deuxième (104a, 104c) et troisième (104b, 104d) fibres optiques comprennent un manchon (102a, 102c, 102b, 102d) qui les entoure, la partie évidée (74) située dans le bord latéral de la plaque de commutation (60, 60') étant mobile entre des première et seconde positions de commutation dans lesquelles, dans une première portion, l'une des fibres (104a-c) est en alignement optique avec ladite première fibre (92), et, lorsque le commutateur est déplacé de la première à une seconde position, la partie évidée (74) exerce une action de came contre la partie à manchon (102a-c) de la première des fibres (104a-c), l'éloignant d'une disposition en butée avec la première fibre (92) et ladite première fibre (92) est amenée en alignement optique avec l'autre desdites fibres, et lorsque la partie évidée (74) est amenée en alignement avec la partie à manchon (102a-c) sur l'autre fibre, cette dernière se déplace axialement vers l'intérieur de la partie évidée (74) et vient en relation de butée avec ladite première fibre (92).

8. Commutateur optique destiné à faire varier le trajet lumineux d'une fibre optique, comprenant une première fibre optique (292) qui est mobile entre des première et seconde positions qui placent la première fibre optique (292) en alignement avec une deuxième (204a, 204c) ou une troisième (204b, 204d) fibre optique, et des moyens d'alignement destinés à aligner les première (292) et deuxième (204a, 204c), et les première (292) et troisième (204b, 204d) fibres optiques en alignement avec des faces extrêmes des fibres dans une disposition face à face, les moyens d'alignement comprenant deux canaux (238, 238') qui s'étendent sensiblement sur la longueur des deuxième et troisième fibres (204a-d) et ladite première fibre (292) étant mobile entre les deux canaux (238, 238') jusqu'en alignement et hors d'alignement avec les deuxième (204a, 204c) et troisième (204b, 204d) fibres, le commutateur étant caractérisé en ce qu'il comporte plusieurs premières fibres optiques (292) qui s'élèvent dans une direction transversale à leur longueur, et un nombre identique de deuxièmes (204a, 204c) et troisièmes (204b, 204d) fibres optiques, le mouvement des premières fibres optiques (292) provoquant l'alignement des extrémités respectives des premières fibres optiques avec les extrémités des deuxièmes fibres optiques ou avec les extrémités des troisièmes fibres optiques ; et en ce que chacune des fibres optiques (292, 204a, 204d) est reçue dans une gorge en V et comporte un revêtement extérieur de matière métallique déposée, constituant un tronçon extrême de fibre élastique sur cette fibre, l'élasticité des tronçons extrêmes des deuxièmes et troisièmes fibres (204a, 204d) appliquant une charge de ressort auxdits tronçons extrêmes à l'intérieur et contre la surface de la gorge en V respective pour réaliser un alignement précis des extrémités respectives des premières fibres optiques avec les extrémités des deuxièmes fibres optiques ou les extrémités des troisièmes fibres optiques.
